# EUROPÄISCHE PATENTSCHRIFT

(11) **EP 1 620 861 B1**
(45) Veröffentlichungstag und Bekanntmachung des Hinweises auf die Patenterteilung: **21.11.2007**
(21) Anmeldenummer: 05701346.8
(22) Anmeldetag: 04.02.2005
(51) Int. Cl.: G21C 3/322, G21C 3/352

(54) **BRENNELEMENT FÜR EINEN DRUCKWASSERKERNREAKTOR**
FUEL ELEMENT FOR A PRESSURIZED WATER REACTOR
ELEMENT COMBUSTIBLE DESTINE A UN REACTEUR NUCLEAIRE HYDRAULIQUE

(30) Priorität: 25.03.2004 DE 102004014499
(43) Veröffentlichungstag der Anmeldung: 01.02.2006
(73) Patentinhaber: AREVA NP GmbH, 91058 Erlangen (DE)
(72) Erfinder: STABEL, Jürgen, 91058 Erlangen (DE); REINDERS, Rudi, 91058 Erlangen (DE); REN, Mingmin, 91058 Erlangen (DE)
(74) Vertreter: Mörtel & Höfner
(86) Internationale Anmeldenummer: PCT/EP2005/001137
(87) Internationale Veröffentlichungsnummer: WO 2005/098870

(56) Entgegenhaltungen:
- EP-A- 0 656 631
- WO-A-02/03393
- DE-A1- 2 122 853
- FR-A- 2 766 002
- US-A- 3 862 000
- US-A- 5 778 035

## Beschreibung

Die Erfindung bezieht sich auf ein Brennelement für einen Druckwasserkernreaktor, wie es beispielsweise aus der DE 196 35 927 C1 bekannt ist.

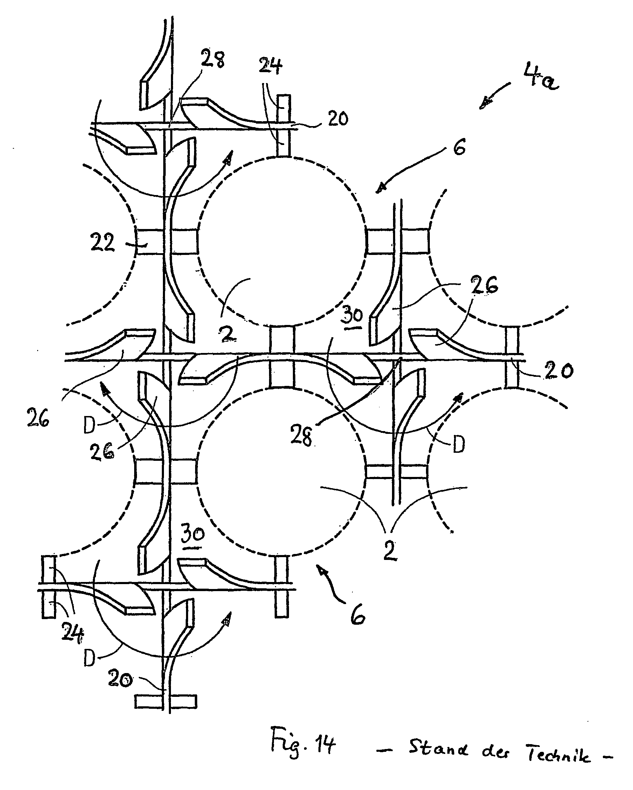

Ein solches Brennelement ist exemplarisch in Fig. 13 veranschaulicht. Bei einem solchen Brennelement sind eine Vielzahl von Brennstäben 2 in Stabrichtung (axial) parallel zueinander durch mehrere, voneinander axial beabstandete Abstandhalter 4 geführt, die jeweils ein zweidimensionales Gitter mit einer Mehrzahl von Gitterzellen 6 bilden, die in Spalten 8 und Reihen 10 angeordnet sind. Durch die Gitterzellen 6 dieses Gitters sind außer den Brennstäben 2 auch an ausgewählten Positionen Stützrohre hindurch geführt, die keinen Brennstoff enthalten und zur Aufnahme und zum Führen von Steuerstäben (sog. Steuerstabführungsrohre 12) vorgesehen sind. Außerdem können noch Stützrohre vorhanden sein, die ebenfalls keinen Brennstoff enthalten und lediglich zur Erhöhung der Stabilität dienen (Instrumentierungsrohre oder Strukturrohre, im beispielhaft dargestellten Brennelement sind weder Instrumentierungsrohre noch Strukturrohre vorgesehen).

Um die kritische Heizflächenbelastung (critical heat flux CHF) zu erhöhen, werden die Abstandhalter mit strömungsführenden Mitteln versehen, die neben einer lokalen Durchmischungsfunktion, beispielsweise durch Erzeugung einer Drallströmung stromabwärts vom Abstandhalter, auch die Funktion haben, einen transversalen Austausch des Kühlmittels zwischen wärmeren Bereichen und kälteren Bereichen des Brennelementes herbeizuführen. Ein solcher transversaler Austausch dient dazu, die Kühlmitteltemperatur über die gesamte Querschnittsfläche des Brennelementes zu vergleichmäßigen und auf diese Weise die kritische Heizflächenbelastung zu erhöhen. Der transversale Queraustausch kann außerdem auch über die Grenzen eines Brennelementes hinaus erfolgen, wie dies aus der DE 21 22 853 A bekannt ist. Dort ist ein Brennelement für einen Druckwasserkernreaktor offenbart, bei dem ein solcher Queraustausch zwischen benachbarten Brennelementen stattfindet, indem um einen von vier benachbarten Brennelementen gebildeten Kreuzungspunkt eine Umlaufströmung erzeugt wird.

Bei Brennelementen mit Abstandhaltern, deren Gitterzellen wie bei der aus der DE 21 22 853 A bekannten Ausführungsform durch einwandige Gitterstege voneinander getrennt sind, werden diese strömungsführenden Mittel durch Leitbleche gebildet, die stromabseitig um das von einem Kreuzungspunkt des Gitters gebildete Zentrum eines Strömungsunterkanals herum angeordnet sind. Diese Leitbleche werden auch als Drall- oder Ablenkfahnen bezeichnet. An jedem Kreuzungspunkt können dabei bis zu vier solcher Leitbleche oder Fahnen vorgesehen sein.

Ein solches bekanntes Brennelement ist in Draufsicht auf einen Abstandhalter 4a in Fig. 14 dargestellt. Der Abstandhalter 4a ist aus einer Vielzahl sich rechtwinklig kreuzender Gitterstege 20 aufgebaut, die.sich gegenseitig durchdringen. Die Gitterstege 20 bilden annähernd quadratische Gitterzellen 6 zur Aufnahme der Brennstäbe 2, die in den Gitterzellen 6 durch Noppen 22 und Federn 24 fest eingespannt sind. An den Gitterstegen 20 des Abstandhalters 4a sind Ablenkelemente 26 angeordnet, die im Ausführungsbeispiel der Figur seitlich abgebogene Drallfahnen sind. Die Drallfahnen sind dabei derart an den Kreuzungsstellen angeordnet, dass zwischen den Brennstäben 2 durch den Abstandhalter 4a in Axialrichtung (parallel zu den Brennstäben 2) in sogenannten, an den Kreuzungsstellen der Gitterstege jeweils befindlichen Strömungsunterkanälen 30 fließendes Kühlmittel abgelenkt wird und eine senkrecht zur Axialrichtung gerichtete (horizontale) Geschwindigkeitskomponente entsteht. Im konkret dargestellten Ausführungsbeispiel wird der Strömung ein Drall D um die Mittenachse 28 des Strömungsunterkanals 30 aufgeprägt. Die durch die Drallfahnen verursachte Drehbewegung führt zu einer besseren lokalen Durchmischung des in diesem Strömungsunterkanal 30 strömenden Kühlmittels und vergrößert stromabseitig die kritische Heizflächenbelastung. Jeweils benachbarte Drallströmungen haben einander entgegengesetzte Richtung, so dass sich die jeweils ausgeübten Drehmomente bezogen auf den gesamten Brennelementquerschnitt kompensieren. Durch die aufgeprägten Drallströmungen findet auch ein Austausch des Kühlmittels zwischen benachbarten Strömungsunterkanälen 30 statt, der allerdings nur mäßig ausgeprägt ist.

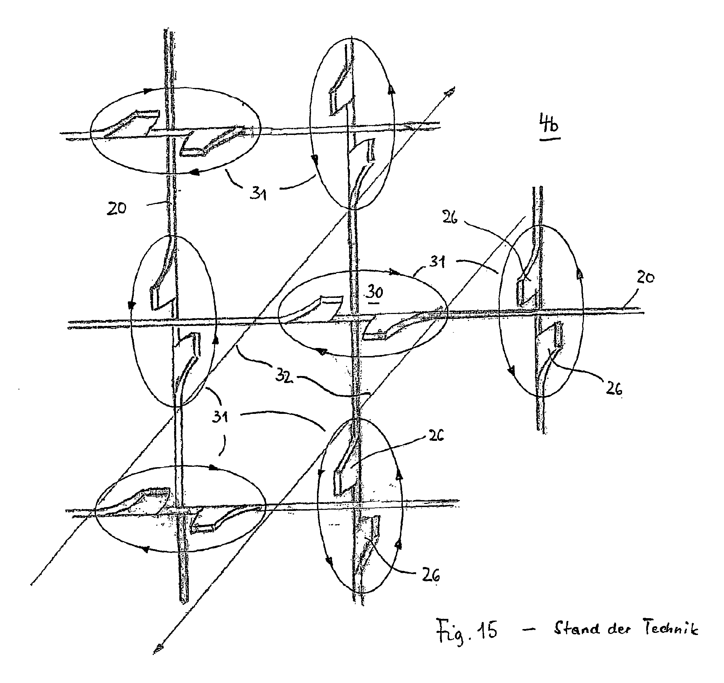

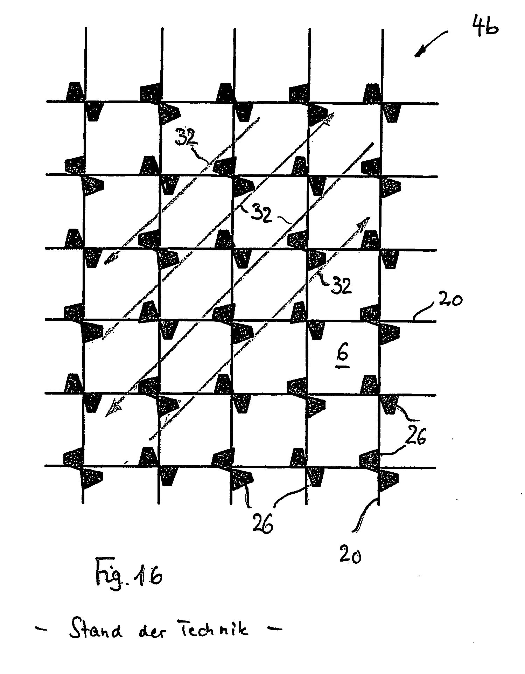

Eine Verbesserung des Quertransports des Kühlmittels im Brennelement wird durch einen Abstandhalter 4b erzielt, wie er in Figur 15 gezeigt ist, wobei aus Gründen der Übersichtlichkeit in dieser und in den nachfolgenden Figuren die die Gitterzellen 6 durchsetzenden Brennstäbe nicht dargestellt sind. Der Abstandhalter 4b enthält in jedem der durch vier aneinander grenzende Gitterzellen 6 gebildeten Strömungsunterkanal 30 nur zwei Ablenkelemente 26, die das Kühlmittel in einander entgegengesetzte Richtung ablenken. In jedem Strömungsunterkanal 30 wird eine Umlaufströmung in Richtung der Pfeile 31 erzeugt. Diese überlagern sich zu übergeordneten, d. h. über mehrere Gitterzellen hinausreichende Querströmungen 32 in Richtung der Diagonale. Diese sogenannten Zweiflügler haben somit einen gegenüber Vierflüglern verbesserten Durchmischungsgrad, wie dies im verkleinerten Maßstab der Figur 16 deutlicher zum Ausdruck kommt. Die entstehenden Querströmungen 32 erstrecken sich praktisch über den gesamten Querschnitt des Brennelementes.

Ein alternatives Abstandhalterdesign ist beispielsweise aus der EP 0 237 064 A2 bekannt. Bei dem dort offenbarten Abstandhalter ist jeder Gittersteg durch zwei miteinander verschweißte dünne Blechstreifen gebildet. Anstelle von Drallfahnen an der Oberkante des Gittersteges sind bei diesen Abstandhaltern die Blechstreifen mit erhabenen Ausformungen versehen, die sich ins Innere der vom Blechstreifen jeweils begrenzten Gitterzelle erstrecken. Jeweils einander gegenüberliegende benachbarte Ausformungen der zu einem Gittersteg zusammengefügten Blechstreifen bilden einen sich in vertikaler Richtung erstreckenden, annähernd rohrförmigen Strömungskanal. Jeder Strömungskanal ist relativ zur Vertikalen geneigt und erzeugt eine parallel zum Steg orientierte, auf einen Kreuzungspunkt der Stege gerichtete Strömungskomponente der Kühlflüssigkeit. Die Neigungswinkel der Strömungsunterkanäle sind dabei so angeordnet, dass eine Drallströmung um die die Gitterzellen jeweils durchsetzenden Brennstäbe entsteht.

Bei Verwendung eines solchen bekannten doppelwandigen Abstandhalters konnten im praktischen Einsatz nur geringe Frettingschäden an den Brennstabhüllrohren beobachtet werden.

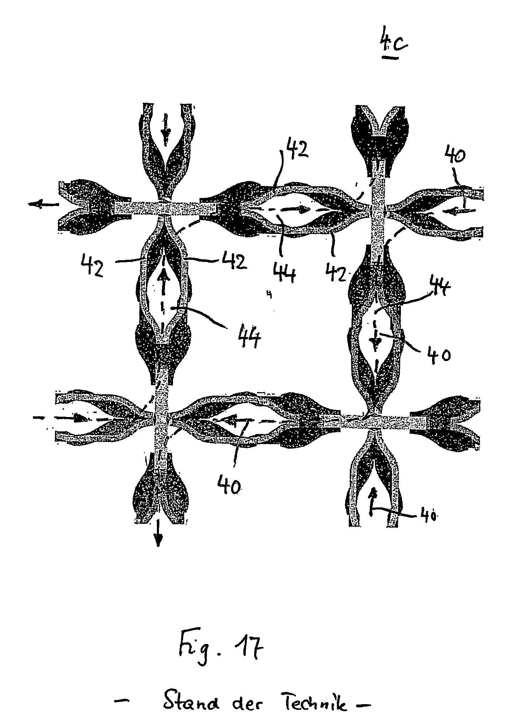

Das sich bei einem solchen bekannten Abstandhalter 4c im Nachlauf ergebende Strömungsbild ist in Figur 17 anhand der Pfeile 40 dargestellt. In den durch Ausformungen 42 gebildeten Strömungskanälen 44 wird dem Kühlmittel eine Querkomponente der Strömung aufgeprägt, die zu einem Umlauf des Kühlmittels um die die Gitterzellen jeweils durchsetzenden Brennstäbe führt. Da die von den einer Kreuzungsstelle der Gitterstege benachbarten Strömungskanälen 44 erzeugten Querströmungen 40 einander paarweise entgegengesetzt sind, wird nur ein geringer und außerdem allenfalls labiler Queraustausch von Kühlmittel über die jeweilige Gitterzellengrenze hinaus, d. h. zwischen den Gitterzellen erzeugt.

Aus der DE 201 12 336 U1 ist es bekannt, einen solchen doppelwandigen Abstandhalter in der Nähe der Kreuzungspunkte außerdem noch mit Leitfahnen zu versehen, um dem durch den Strömungsunterkanal fließenden Kühlmittel eine Strömungskomponente quer zum Brennstab zu überlagern. Durch diese Maßnahme kann die kritische Heizflächenbelastung verbessert werden.

Der Erfindung liegt nun die Aufgabe zu Grunde, ein Brennelement anzugeben, das sowohl hinsichtlich seiner kritischen Heizflächenbelastung als auch hinsichtlich seiner Frettingeigenschaften optimiert ist.

Die benannte Aufgabe wird gemäß der Erfindung gelöst mit einem Brennelement mit den Merkmalen des Patentanspruches 1. Das Brennelement für einen Druckwasserkernreaktor enthält eine Vielzahl von Brennstäben, die in einer Mehrzahl von axial beabstandeten Abstandhaltern geführt sind, die aus sich kreuzenden Gitterstegen aufgebaut sind, die jeweils ein Gitter mit einer Vielzahl von Gitterzellen bilden, die in Reihen und Spalten angeordnet sind, wobei die Gitterstege strömungsführende Mittel aufweisen, die dem jeweils zwischen den Brennstäben in Strömungsunterkanälen axial strömenden Kühlwasser eine parallel zur Abstandhalterebene orientierte Querströmungskomponente aufprägen. Zumindest einer der Abstandhalter ist aus einer Vielzahl von Teilgebieten aufgebaut, die jeweils größer als eine Gitterzelle sind, und die strömungsführenden Mittel sind derart gestaltet und im Abstandhalter verteilt, dass im Nachlauf über jedem Teilgebiet eine Querströmungsverteilung erzeugt wird, die einen Austausch von Kühlwasser zumindest annähernd ausschließlich zwischen innerhalb des Teilgebietes befindlichen Strömungsunterkanälen bewirkt. Mit anderen Worten: Über dem Teilgebiet bildet sich zumindest in einem lokalen, innerhalb des Teilbereichs befindlichen und die Grenze zwischen zwei benachbarten Strömungsunterkanälen übergreifenden Unterbereich eine gerichtete Querströmung aus, die sich auf das Teilgebiet beschränkt und sich nicht oder nur in einem vernachlässigbaren Ausmaß in benachbarte Teilgebiete fortsetzt. Am Rand dieses Teilgebietes ist somit die Geschwindigkeitskomponente vₙ des Kühlmittels senkrecht zum Rand gleich Null.

Durch diese Maßnahme wird trotz nach wie vor hoher kritischer Heizflächenbelastung die Frettingresistenz signifikant verbessert.

Die Erfindung beruht dabei auf der Erkenntnis, dass ein an jedem Kreuzungspunkt nur mit zwei Ablenkelementen (split vanes) versehener Abstandhalter, wie er beispielhaft in Fig. 15 und 16 dargestellt ist, zwar eine gegenüber Vierflüglern (Fig. 14) oder gegenüber dem aus der EP 0 237 064 A2 bekannten doppelwandigen Abstandhalter (Fig. 17) deutlich bessere Querdurchmischung des Kühlmittels über den Querschnitt des Brennelementes bewirkt, so dass damit aufgebaute Brennelemente eine deutlich größere kritische Heizflächenbelastung aufweisen. Die im Nachlauf des bekannten, mit split vanes versehenen Abstandhalters entstehenden Querströmungen in einer Diagonalrichtung, die sich über die gesamte Querschnittsfläche des Brennelementes erstrecken, sind jedoch aus mechanischer Sicht von Nachteil, da sie notwendig zu resultierenden Kräften oder Momenten auf das Brennelement führen. Diese Kräfte oder Momente können zu selbstinduzierten Schwingungen führen, die mit einer erhöhten. Gefahr von Frettingschäden einhergehen können.

Die Erfindung beruht nun auf der Überlegung, dass es zur Verbesserung der kritischen Heizflächenbelastung nicht zwingend erforderlich ist, einen Queraustausch des Kühlmittels über nahezu die gesamte Querschnittfläche des Brennelements zu erzeugen. Vielmehr ist es ausreichend, wenn ein ausgeprägter Queraustausch des Kühlmittels nur zwischen einer Gruppe benachbarter Strömungsunterkanäle eines Teilgebietes stattfindet.

Die durch eine solche lokale Inhomogenität auf das das Teilgebiet durchsetzende Brennstabteilbündel ausgeübten Kräfte oder Drehmomente werden in einer bevorzugten Ausgestaltung der Erfindung global bezüglich des gesamten Brennelementquerschnittes wenigstens annähernd dadurch kompensiert, dass zumindest der Mehrzahl der Teilgebiete jeweils ein zu diesem disjunktes Teilgebiet derart zugeordnet ist, dass sich die aufgrund der Querströmung in dem Teilgebiet und in dem ihm zugeordneten disjunkten Teilgebiet oder den ihm zugeordneten disjunkten Teilgebieten jeweils entstehenden Kräfte und/oder Drehmomente zumindest annähernd gegenseitig aufheben.

In einer weiteren bevorzugten Ausgestaltung der Erfindung sind das Teilgebiet und zumindest ein ihm zugeordnetes disjunktes Teilgebiet spiegelsymmetrisch zueinander aufgebaut. Durch die Spiegelsymmetrie kann auf konstruktiv einfache Weise eine wenigstens annähernd betragsmäßige Gleichheit und Gegensinnigkeit der in diesen Teilgebieten jeweils durch die Querströmungen entstehenden Drehmomente erreicht werden. Desweiteren heben sich wegen der Spiegelsymmetrie außerdem auch die in diesen Teilgebieten jeweils entstehenden Kräfte gegenseitig auf.

Vorzugsweise grenzen die einander zugeordneten Teilgebiete aneinander. Auf diese Weise werden die entstehenden Kräfte und/oder Drehmomente unmittelbar an den Grenzen der Teilgebiete kompensiert.

In einer besonders bevorzugten Ausgestaltung der Erfindung sind die strömungsführenden Mittel innerhalb eines Teilgebiets derart ausgelegt, dass die innerhalb dieses Teilgebiets erzeugten Querströmungen auf dieses lediglich ein Drehmoment ausüben.

Zur weiteren Erläuterung der Erfindung wird auf die Ausführungsbeispiele der Zeichnungen verwiesen. Es zeigen:
- Figur 1: eine Ausführungsform eines Brennelementes gemäß der Erfindung in einem teilweisen Querschnitt oberhalb eines Abstandhalters in einer schematischen Prinzipdarstellung,
- Figur 2-5: jeweils eine mögliche Verteilung der Querströmungskomponenten bei einem Brennelement gemäß der Erfindung oberhalb eines Abstandhalters in ebenfalls schematischen Prinzipdarstellungen,
- Figuren 6,7: weitere Ausführungsformen, bei denen der Abstandhalter eine doppelwandige Stegfläche mit zusätzlich aufgesetzten Ablenkfahnen aufweist,
- Figur 8: ein Ausführungsbeispiel, bei dem das Brennelement einen fahnenlosen Abstandhalter aufweist, der aus doppelwandigen Stegblechen aufgebaut ist,
- Figur 9: ein Ausführungsbeispiel, bei dem das Brennelement einen einwandigen Abstandhalter mit versetzten und gleichgerichteten Ablenkfahnen aufweist,
- Figur 10: ein Ausführungsbeispiel mit einem Teilgebiet, dessen Grenzen schräg zu den Gitterstegen verlaufen,
- Figur 11: einen Ausschnitt eines Brennelementes gemäß der Erfindung in einem Randbereich,
- Figur 12: ein 18x18-Brennelement zur Erläuterung der vorgehensweise bei der praktischen Realisierung der Erfindung,
- Figur 13: ein Brennelement eines Druckwasserkernreaktors gemäß dem Stand der Technik,
- Figur 14-17: jeweils ein Brennelement in einer schematischen Draufsicht auf einen Abstandhalter, wie es aus dem Stand der Technik bekannt ist.

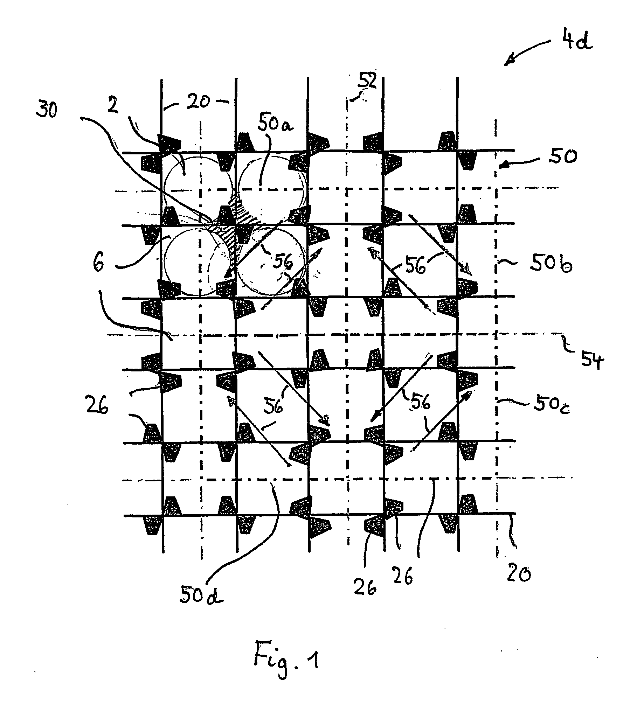

Gemäß Fig. 1 weist ein Brennelement gemäß der Erfindung einen Abstandhalter 4d auf, dessen Gitterstege 20 an den Kreuzungsstellen stromabwärts mit paarweise angeordneten Ablenkelementen 26 versehen sind. Im Ausführungsbeispiel handelt es sich um sogenannte "split vanes", die typgleich zu den in Figuren 15 und 16 dargestellten Ablenkelementen sind, die jedoch gemäß der Erfindung in einer anderen Anordnung an den Kreuzungsstellen verteilt sind.

Der Abstandhalter 4d ist aus einer Vielzahl von rechteckigen, im Beispiel quadratischen disjunkten Teilgebieten 50 aufgebaut, die jeweils größer als eine einzelne Gitterzelle 6 sind. Im Ausführungsbeispiel umfasst jedes Teilgebiet 50 eine vollständige zentrale Gitterzelle 6, jeweils vier halbe benachbarte Gitterzellen 6 sowie vier Quadranten der diagonal angrenzenden Gitterzellen 6. Die Gesamtfläche jedes Teilgebietes 50 entspricht somit der Fläche von vier Gitterzellen 6. Da sich die Eckpunkte der Teilgebiete 50 jeweils in der Mitte einer Gitterzelle 6 befinden, überdeckt jedes Teilgebiet 50 vier vollständige Strömungsunterkanäle 30. Dies ist für einen, von vier Brennstäben 2 umgebenen Strömungsunterkanal 30 durch Schraffur veranschaulicht. In der Figur sind vier vollständige Teilgebiete 50a-d eingezeichnet. Die innerhalb eines Teilgebietes 50a-d befindlichen strömungsführenden Ablenkelemente 26 sind spiegelsymmetrisch zu den Ablenkelementen des jeweils an einer gemeinsamen Grenzfläche benachbarten Teilgebietes 50a-d angeordnet. Teilgebiet 50b geht so durch Spiegelung an einer senkrecht zur Zeichenebene verlaufenden Spiegelebene 52 aus dem Teilgebiet 50a hervor. Entsprechend ist Teilgebiet 50c bezüglich einer Spiegelebene 54 spiegelsymmetrisch zum Teilgebiet 50b. Teilgebiet 50d geht durch Spiegelung an der Spiegelebene 52 aus dem Teilgebiet 50c hervor und Teilgebiet 50a und 50d sind zueinander bezüglich der Spiegelebene 54 spiegelsymmetrisch. In gleicher Weise sind auch die den Teilgebieten 50a-d benachbarten, und in der Figur nur zum Teil wiedergegebenen Teilgebiete aufgebaut. Durch die vierfache Spiegelung um jeweils zueinander orthogonale und sich in einer Geraden schneidenden Spiegelebene wird das Teilgebiet 50a in sich selbst abgebildet.

Dieser konstruktive Aufbau bewirkt nun, dass sich in jedem der Teilgebiete 50a-d nur Querströmungen 56 ausbilden können, die lokal auf das jeweilige Teilgebiet 50a-d begrenzt sind und sich nicht über dessen Grenzen hinaus erstrecken, sondern an diesen Grenzen auf Querströmungen des benachbarten Teilgebietes 50a-d treffen, die eine andere Richtung aufweisen. Lokal begrenzte Querströmung im Sinne der Erfindung heißt, dass die Normalkomponente vₙ der horizontalen Strömungsgeschwindigkeit am Rand jedes Teilgebietes 50a-d zumindest annähernd gleich Null ist: vₙ=0.

Im Ausführungsbeispiel entstehen in jedem der Teilgebiete 50a-d lokale gerichtete Querströmungen, die einen Queraustausch von Kühlwasser zwischen benachbarten Strömungsunterkanälen 30, die sich innerhalb eines Teilgebietes 50a-d befinden, realisieren. Diese kreuzen sich jedoch jeweils mit den lokalen Querströmungen des Nachbarteilgebietes, so dass sie sich nicht zu globalen Strömungsmustern vereinigen können. Durch die spiegelsymmetrische Anordnung der vier um einen Kreuzungsstelle angeordneten Teilgebiete 50a-d werden somit großflächige, d.h. sich über den gesamten Querschnitt des Brennelementes entstehende Querströmungen wirksam unterbunden.

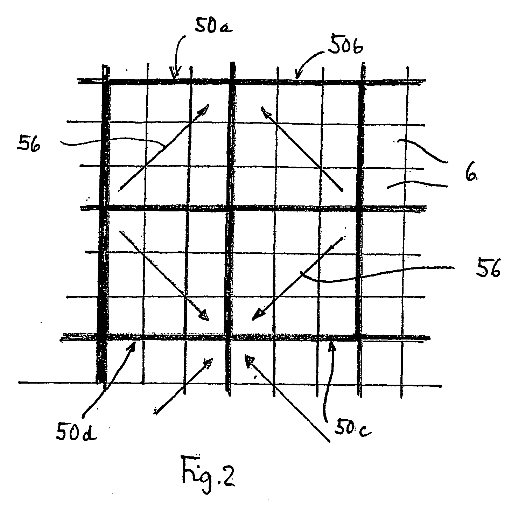

Im Ausführungsbeispiel gemäß Figur 2 sind Teilgebiete 50a - d vorgesehen, die jeweils aus neun vollständigen Gitterzellen 6 aufgebaut sind. In diesen Teilgebieten 50a - d bilden sich durch strömungsführende Mittel Querströmungen 56 aus, die sich wie im Ausführungsbeispiel dargestellt diagonal über das gesamte jeweilige Teilgebiet 50a bis d erstrecken. Auf jedes Teilgebiet 50a - d wird durch die jeweils in ihm ausgebildete Querströmung 56 nur eine Kraft, jedoch kein Drehmoment ausgeübt, wobei global über den gesamten Querschnitt des Brennelementes gesehen ein Kräftegleichgewicht gegeben ist.

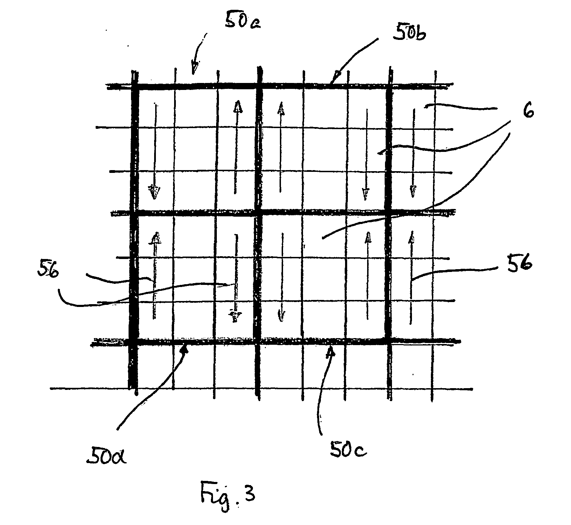

Die strömungsführenden Mittel sind in dieser und den folgenden Figuren 3 - 5 nicht explizit dargestellt, da diese Figuren nur zur Erläuterung prinzipiell möglicher Strömungsmuster dienen und die hierzu geeigneten strömungsführenden Mittel in einer Vielzahl von konstruktiven Gestaltungsmöglichkeiten realisiert werden können.

Auch in diesen Ausführungsbeispielen sind die Teilgebiete 50a bis d spiegelsymmetrisch zueinander derart aufgebaut, dass sie durch eine Spiegelung an einer in der jeweiligen Grenzfläche liegenden Spiegelebene auseinander hervorgehen.

Im Beispiel der Figur 3 ist außerdem zu erkennen, dass sowohl das auf die vier aneinander grenzenden Teilgebiete 50a bis d wirkenden Gesamtdrehmoment als auch die auf sie wirkenden Kräfte gegenseitig kompensieren.

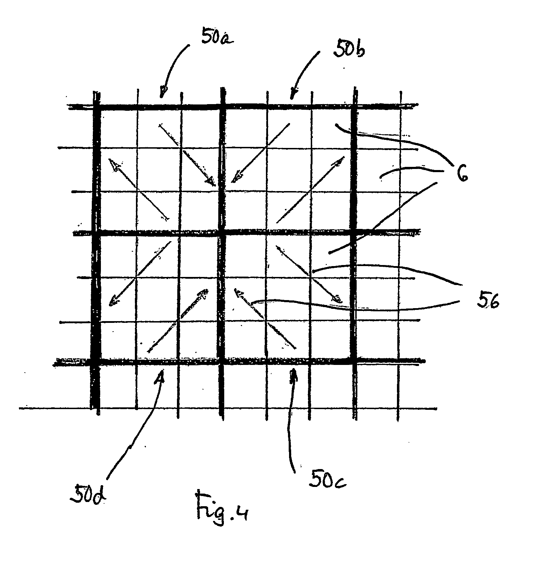

In den Ausführungsbeispielen gemäß Figuren 3 und 4 werden durch strömungsführende Mittel in jedem der Teilgebiete 50a - d paarweise einander entgegengesetzte Querströmungen 56 erzeugt, die im Beispiel der Fig. 3 entweder parallel zu den Gitterspalten oder wie in Fig. 4 ähnlich zum Ausführungsbeispiel gemäß Fig. 1 diagonal dazu verlaufen.

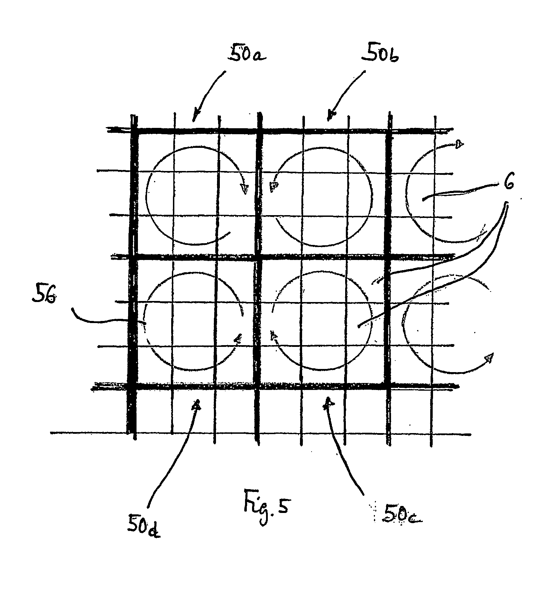

Figur 5 zeigt eine Situation, bei der in jedem Teilgebiet 50a - d nur eine Drallströmung 56 erzeugt wird, deren Drehsinn dem Drehsinn der in benachbarten Teilgebieten 50a - d erzeugten Drallströmung 56 entgegengesetzt ist.

In allen Ausführungsbeispielen gemäß Fig. 2 - 5 erfolgt ein Queraustausch des Kühlwassers nur zwischen Strömungsunterkanälen oder zwischen den Teilsegmenten verschiedener Strömungsunterkanäle, die sich innerhalb eines Teilgebietes 50a-d befinden.

Im Ausführungsbeispiel gemäß Fig. 6 ist ein Abstandhalter 4e vorgesehen, der aus ersten und zweiten doppelwandigen Gitterstegen 20a, b aufgebaut ist, die durch entsprechende, in der Figur schematisch angedeutete Ausformungen erste und zweite Strömungskanäle 44a bzw. b aufweisen. Die ersten Strömungskanäle 44a verlaufen schräg zur Vertikalen , d.h. schräg zur Brennelementachse. Sie wirken als strömungsführende Mittel, die dem Kühlwasser eine Geschwindigkeitskomponente quer zur Vertikalen aufprägen, wie dies auch bei dem aus der EP 0 237 064 A2 (Fig. 17) bekannten Abstandhalter der Fall ist. Die zweiten Gitterstege 26b sind mit den durch Kreuzschraffur gekennzeichneten zweiten Strömungskanälen 44b versehen, deren Mittenachsen parallel zur Vertikalen verlaufen.

In diesem Ausführungsbeispiel wird ein Teilgebiet 50a, b jeweils durch vier Gitterzellen 6 gebildet, wobei die ersten Strömungskanäle 44a jeweils am Rand jedes Teilgebietes 50a, b angeordnet sind. Die Teilgebiete 50a,b gehen ebenfalls durch Spiegelung an einer durch die Grenzfläche zwischen diesen beiden Teilgebieten 50a,b definierten Spiegelebene auseinander hervor. Die schräg verlaufenden ersten Strömungskanäle 44a erzeugen in jedem Teilgebiet 50a,b eine Umlaufströmung, die jedoch einander entgegengesetzt gerichtet sind. Im Teilgebiet 50a verläuft diese Umlaufströmung im Uhrzeigersinn und im Teilgebiet 50b gegen den Uhrzeigersinn. In der Mitte jedes Teilgebietes 50a, b sind Ablenkelemente 26 angeordnet, die im zentralen Strömungsunterkanal 30 zusätzlich eine Drallströmung erzeugen, die der außen umlaufenden Strömung entgegengesetzt gerichtet ist, so dass das auf das gesamte Teilgebiet 50a,b jeweils erzeugte Drehmoment entsprechend verringert ist und eine gute Kühlung der den zentralen Strömungsunterkanälen 30 benachbarten Zonen der Brennstäbe sichergestellt ist.

Durch die am äußeren Umfang der Teilgebiete 50a,b jeweils erzeugte Umlaufströmung wird eine verbesserte Durchmischung zwischen.Strömungsunterkanälen 30 erzeugt, die sich am Rand des jeweiligen Teilgebietes befinden. Dieser beschränkt sich aber auf den Queraustausch zwischen den Teilsegmenten verschiedener Strömungsunterkanäle 30, die innerhalb des Teilgebietes 50a,b liegen. Auch in diesem Ausführungsbeispiel sind die Teilgebiete 50a, b nach den gleichen Spiegelungsvorschriften konstruiert, wie sie anhand der Figuren 1 bis 5 erläutert sind.

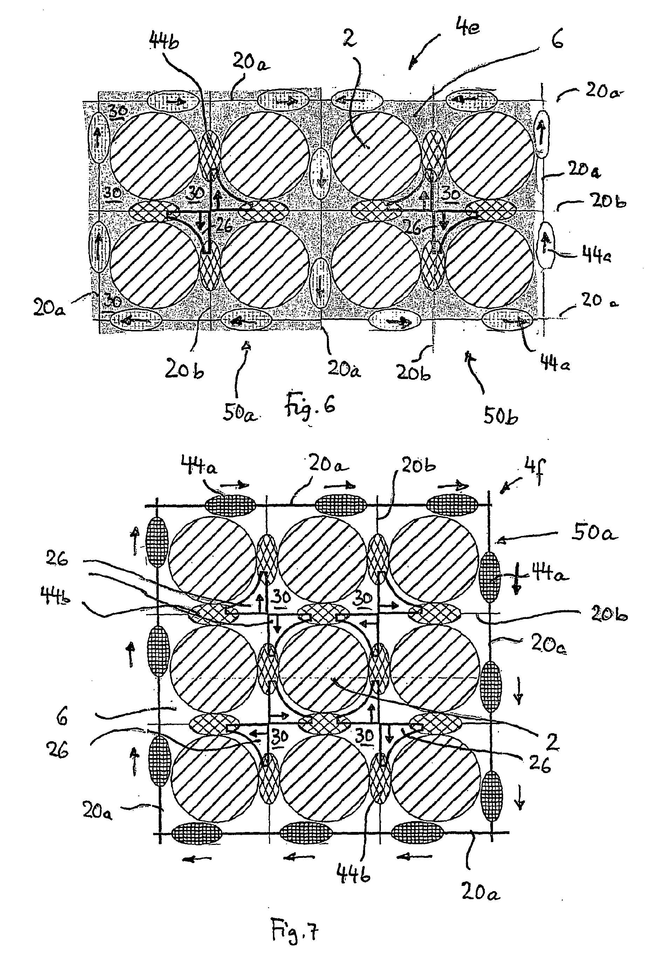

Aus dem Ausführungsbeispiel gemäß Fig. 7 ist ein Teilgebiet 50a eines Abstandhalters 4f veranschaulicht, das anstelle von vier Gitterzellen 6 neun Gitterzellen 6 enthält. Auch in diesem Fall sind die Gitterstege 20a,b des Abstandhalters 4f doppelwandig, so dass durch entsprechende Ausformungen in den Stegblechen erste und zweite Strömungskanäle 44a,b entstehen, die schräg bzw. parallel zur Vertikalen verlaufen, so dass um jedes Teilgebiet, von denen in der Figur nur eines dargestellt ist, eine außen umlaufende Strömung erzeugt wird. An den innenliegenden Kreuzungsstellen sind Ablenkelemente 26 angeordnet, die in den innenliegenden Strömungsunterkanälen 30 eine Drallströmung erzeugen und damit eine verbesserte Kühlung des innenliegenden Brennstabes 2 und der ihm benachbarten Zonen der außenliegenden Brennstäbe 2 bewirken.

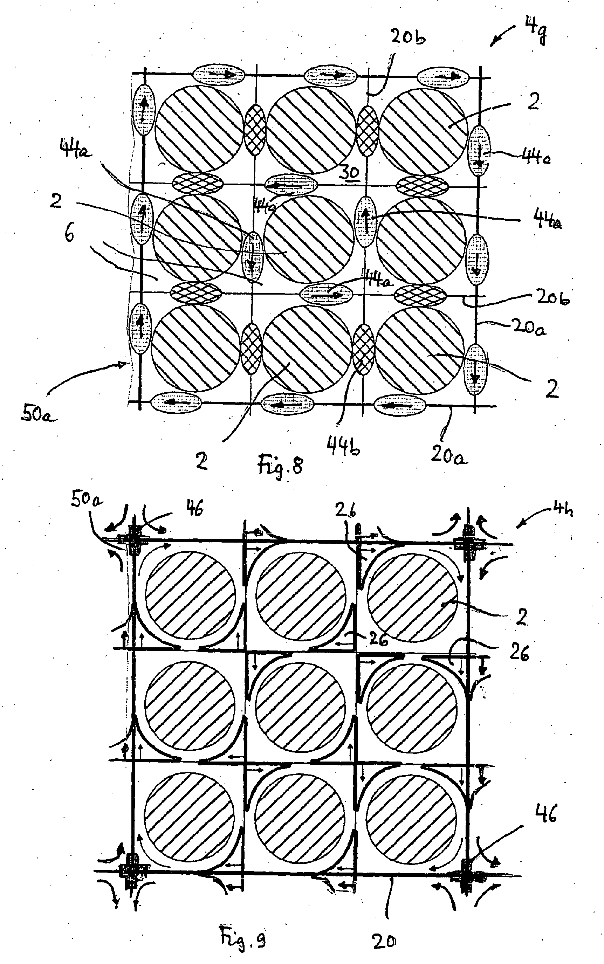

Anstelle der in den Ausführungsbeispielen gemäß der Fig. 6 und 7 an den innenliegenden Kreuzungspunkten jeweils vorgesehenen fahnenförmigen Ablenkelemente kann bei einem Abstandhalter 4g gemäß Fig. 8 die mittlere Gitterzelle 6 auch mit schräg gerichteten ersten Kühlkanälen 44a versehen sein, die um den mittleren Brennstab 2 eine Umlaufströmung erzeugen, die der außen erzeugten Umlaufströmung entgegengesetzt gerichtet ist. In diesem Ausführungsbeispiel enthält der zweite Gittersteg 20b sowohl Strömungkanäle des Types 44a (geneigt zur Vertikalen) als auch des Typs 44b (parallel zur Vertikalen).

Eine solche Umlaufströmung um das Teilgebiet kann auch mit einwandigen Gitterstegen und daran angeformten Ablenkelementen 26 erzeugt werden, wie dies bei einem Abstandhalter 4h in Fig. 9 veranschaulicht ist. Um auch in den Eckpunkten in allen vier aneinanderstoßenden Teilgebieten eine jeweils gegensinnige Umlenkung zu bewirken, sind die Gitterstege an den Kreuzungsstellen verlängert. Dies ist in der Fig. symbolisch durch Kreuze 46 mit dickerer Strichstärke angedeutet. Es handelt sich jedoch nicht um eine Wanddickenerhöhung der Stege 20 sondern lediglich um eine auf die Eckpunkte begrenzte Vergrößerung ihrer Steghöhe.

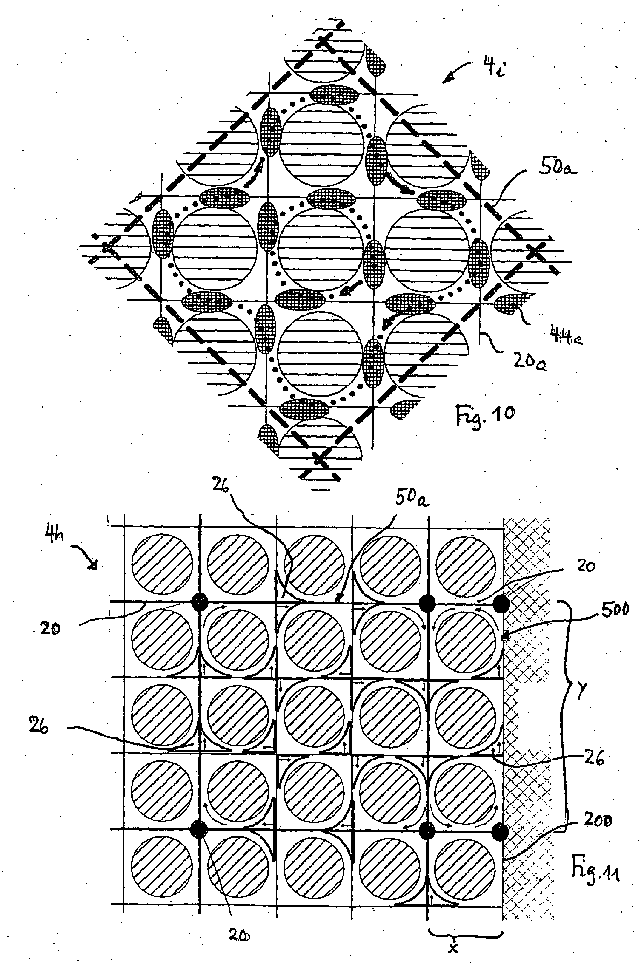

Im Ausführungsbeispiel gemäß Fig. 10 ist Teilgebiet 50a eines Abstandhalters 4i veranschaulicht dessen Grenzen parallel zur Gitterdiagonale verlaufen. Der Abstandhalter 4i ist aus doppelwandigen ersten Gitterstegen 20a aufgebaut, die jeweils mit schräg zur Vertikalen verlaufenden ersten Strömungskanälen 44a versehen ist. Die benachbarten Teilgebiete sind nach den vorstehend erläuterten Spiegelungsprinzipien aufgebaut, d.h. sind jeweils spiegelsymmetrisch zu Spiegelebenen, die senkrecht auf der Zeichenebene stehen und zugleich die Grenzfläche zum jeweils benachbarten Teilgebiet bilden. Auch in diesem Ausführungsbeispiel wirkt ebenso wie in den Ausführungsbeispielen nach Fig. 6 - 9 auf jedes Teilgebiet 50a durch die in diesem Fall erzeugte innere und äußere Umlaufströmung lediglich ein Drehmoment.

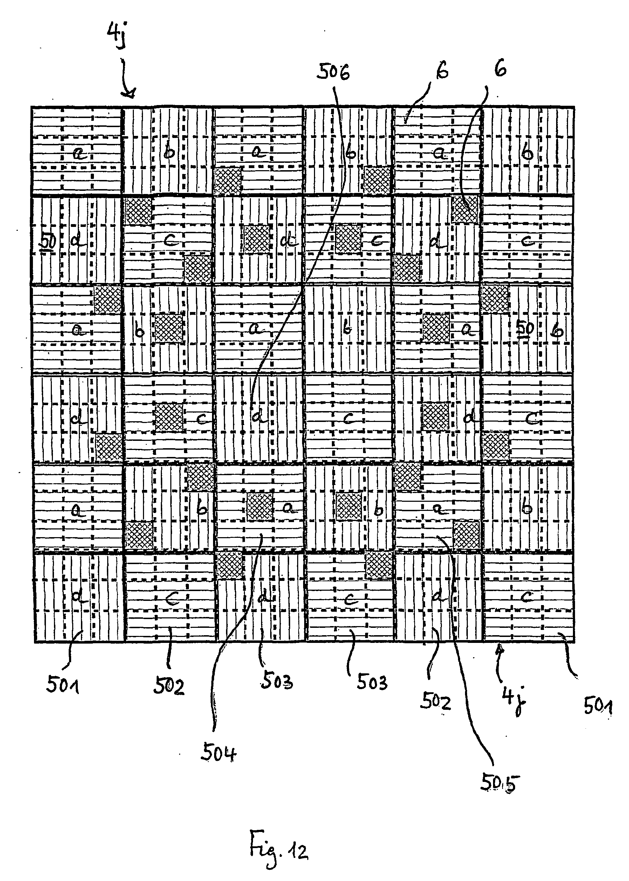

In den vorausgegangenen Beispielen ist vereinfachend von einem Brennelement ausgegangen worden, das sich ausgehend von einem Teilgebiet durch entsprechende Spiegelungsvorschriften aufbauen lässt. Bei einem realen Brennelement ist dies jedoch nicht ohne weiteres möglich, da die hierzu bei enger Auslegung erforderliche strenge Symmetrie an den seitlichen Randbereichen des Brennelementes sowie im Bereich der im Brennelement angeordneten Strukturrohre gestört wird. Fig. 11 zeigt nun eine Situation, wie sie sich am Randbereich eines Brennelementes einstellen kann. Dargestellt ist das Randgebiet eines Abstandhalters 4h, wie er bereits in Fig. 9 erläutert wurde. Der Fig. ist zu entnehmen, dass die anhand der vorhergehenden Figuren erläuterten Spiegelvorschriften nicht mehr in einem strengen Sinn auf benachbarte Teilgebiete angewandt werden können. Das Teilgebiet 50a kann nicht zum Randsteg 200 hin durch eine Spiegelung fortgesetzt werden. In diesen Randgebieten oder in Gebieten gestörter Symmetrie werden nun weitere Teilgebiete festgelegt, die sich in ihrer Größe und in ihrem Aufbau von anderen Teilgebieten unterscheiden. Im Ausführungsbeispiel wird am Rand ein Teilgebiet 500 aus drei Gitterzellen 6 festgelegt (in der Fig. durch geschweifte Klammern x,y gekennzeichnet), in dem Ablenkelemente 26 derart angeordnet sind, dass sich in diesem Teilgebiet eine umlaufende Strömung ergibt. Am gegenüberliegenden Randsteg befindet sich nun ein komplementäres Teilgebiet, das hierzu spiegelsymmetrisch aufgebaut ist, so dass sich die im Teilgebiet 500 und dem diesen zugeordneten komplementären disjunkten Teilgebiet erzeugten Drehmomente aufheben, und weiterhin kein auf den gesamten Querschnitt des Brennelementes bezogenes Drehmomente entstehen kann. Auch in diesem Fall.sind die die Gitterstege 20'in den Eckpunkten der Teilgebiete überhöht (veranschaulicht durch schwarze Kreise).

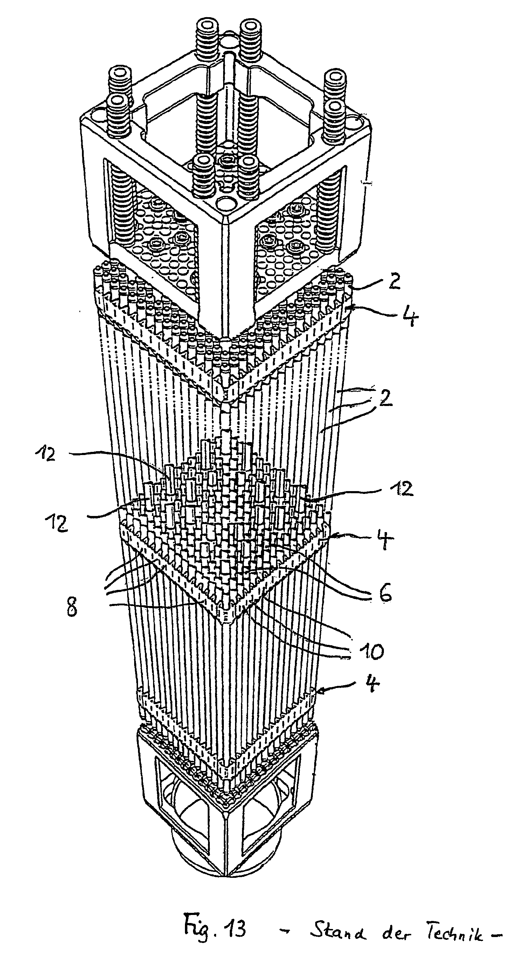

Fig. 12 zeigt nun die Situation in einem Brennelement mit einem.Abstandhalter 4j mit 18x18 Gitterzellen 6, von denen vierundzwanzig durch Kreuzschraffur hervorgehobene Gitterzellen 6 von Steuerstabführungsrohren durchsetzt sind (Steuerstabführungsrohre und Brennstäbe sind aus Gründen der Übersichtlichkeit nicht dargestellt). In diesem Ausführungsbeispiel wird der Abstandhalter 4j in sechsunddreißig disjunkte Teilgebiete 50 zerlegt, die jeweils neun Gitterzellen 6 enthalten. Der Figur ist nun zu entnehmen, dass sich die Teilgebiete 50 in sechs verschiedene Klassen 501 bis 506 einordnen lassen, die sich voneinander entweder durch deren Position am Rand des Abstandhalters 4j oder durch die Anordnung/Anzahl der Steuerstabführungsrohre in ihrem Inneren derart unterscheiden, dass sie nicht durch Spiegelungen ineinander übergeführt werden können. Dies sind vier Teilgebiete der Klasse 501 an den Ecken des Abstandhalters 4j, acht dazu benachbarte Teilgebiete der Klasse 502, die sich ebenfalls am Rand des Abstandhalters 4j befinden, acht Teilgebiete der Klasse 503, die in einer ihrer Ecken mit Steuerstabführungsrohren versehen sind, acht innenliegende Teilgebiete der Klasse 504, deren mittlere Gitterzelle 6 mit einem Steuerstabführungsrohr versehen ist. Vier Teilgebiete der Klasse 505 sind jeweils an einer diagonal gegenüberliegenden Gitterzelle 6 von Steuerstabführungsrohren durchsetzt und vier innenliegende Teilgebiete der Klasse 506 sind nicht von Steuerstabführungsrohren durchsetzt.

Die vier innenliegenden Teilgebiete der Klasse 506 können nun spiegelsymmetrisch zueinander aufgebaut werden, wie dies anhand der Figuren 1 bis 10 erläutert ist und durch die Buchstaben a - d angedeutet ist, wobei Teilgebiet 506b durch Spiegelung aus 506a entsteht, 506c spiegelsymmetrisch zu 506b und 506d spiegelsymmetrisch zu 506c ist, so dass 506a erneut spiegelsymmetrisch zu 506d ist. In gleicher Weise spiegelsymmetrisch zueinander sind die übrigen Teilgebiete aufgebaut. So sind die vier Teilgebiete der Klasse 501 an den Ecken des Abstandhalters 4j in gleicher Weise spiegelsymmetrisch zueinander aufgebaut, wie dies ebenfalls durch die Buchstaben a-d in der Figur angedeutet ist.

Die Buchstaben α-d kennzeichnen einen Typ einer jeden Klasse 501-506. Teilgebiete unterschiedlicher Klassen 501-506 aber desselben Typs α-d gleichen sich weitgehend hinsichtlich des konstruktiven Aufbaus und der Anordnung der in ihnen angeordneten strömungsablenkenden Mittel, d. h. der intrinsischen Symmetrien.

Das für die Teilgebiete 506a bis d angegebene Konstruktionsprinzip bleibt nun für den gesamten Abstandhalter 4j erhalten, so dass sich beispielsweise das Teilgebiet des Typs b der Klasse 506 und das rechts daneben angeordnete Teilgebiet des Typs a der Klasse 504 in ihrem Aufbau weitgehend entsprechen. Dieses Konstruktionsprinzip wird über den gesamten Abstandhalter 4j fortgesetzt, so dass auch in diesem Ausführungsbeispiel keine globalen Querströmungen entstehen können. Darüber hinaus ist sichergestellt, dass für jede Klasse 501 - 506 vier oder acht zueinander spiegelsymmetrisch entsprechend den vorstehend erläuterten Konstruktionsprinzipien aufgebaute Teilgebiete existieren, so dass bezogen auf die gesamte Querschnittsfläche des Brennelementes alle Drehmomente und Kräfte verschwinden.

Bei Abstandhaltern, deren Anzahl von Spalten und Reihen eine Primzahl ist, müssen entsprechend Fig. 11 verschiedenartige Teilgebiete eingeführt werden, die sich in der Größe unterscheiden.

### Bezugszeichenliste

- 2: Brennstab
- 4a: Abstandhalter
- 6: Gitterzelle
- 8: Spalte
- 10: Reihe
- 12: Steuerstabführungsrohr
- 20: Gittersteg
- 20a,b: erster, zweiter doppelwandiger Gittersteg
- 22: Noppe
- 24: Feder
- 26: Ablenkelement
- 28: Mittenachse
- 30: Strömungsunterkanal
- 31: Pfeil
- 32: Querströmung
- 40: Pfeil
- 42: Ausformung
- 44: Strömungsunterkanal
- 46: Kreuz
- 50,: 50a-d,500 Teilgebiet
- 52,54: Spiegelebene
- 56: Querströmung
- 200: Randsteg
- 501-506: Klasse

- a-d: Typ
- D: Drall

## Patentansprüche

1. Brennelement für einen Druckwasserkernreaktor, mit einer Vielzahl von Brennstäben (2), die in einer Mehrzahl von axial beabstandeten Abstandhaltern (4) geführt sind, die aus sich kreuzenden Gitterstegen (20) aufgebaut sind, die jeweils ein Gitter mit einer Vielzahl von Gitterzellen (6) bilden, die in Reihen (10) und Spalten (8) angeordnet sind, wobei die Gitterstege (20) strömungsführende Mittel (26, 44a, 44b) aufweisen, die dem zwischen den Brennstäben (2) jeweils in Strömungsunterkanälen (30) axial strömenden Kühlwasser eine parallel zur Abstandhalterebene orientierte Querströmungskomponente aufprägen, **dadurch gekennzeichnet, dass** zumindest ein Abstandhalter (4) aus einer Vielzahl von Teilgebieten (50a-d, 500,501-506a-d) aufgebaut ist, die jeweils größer als eine Gitterzelle (6) sind, und dass die strömungsführenden Mittel (26, 44a, 44b) derart gestaltet und im Abstandhalter (4) verteilt sind, dass im Nachlauf über jedem Teilgebiet (50a-d, 500,501-506a-d) eine Querströmungsverteilung erzeugt wird, die einen Austausch von Kühlwasser zumindest annähernd ausschließlich zwischen innerhalb des Teilgebiets (50a-d, 500) befindlichen Strömungsunterkanälen (30) bewirkt.

2. Brennelement nach Anspruch 1, bei dem zumindest der Mehrzahl der Teilgebiete (50a-d, 500,501-506a-d) zumindest ein disjunktes Teilgebiet (50a-d, 500,501-506a-d) derart zugeordnet ist, dass sich die aufgrund der Querströmung in dem Teilgebiet (50a-d, 500,501-506a-d) und in dem ihm zugeordneten disjunkten Teilgebiet (50a-d, 500,501-506a-d) oder den ihm zugeordneten disjunkten Teilgebieten (50a-d, 500,501-506a-d) jeweils entstehenden Kräfte und/oder Drehmomente zumindest annähernd gegenseitig aufheben.

3. Brennelement nach Anspruch 2, bei dem das Teilgebiet (50a-d, 500,501-506a-d) und zumindest ein ihm zugeordnetes disjunktes Teilgebiet (50a-d, 500,501-506a-d) spiegelsymmetrisch zueinander sind.

4. Brennelement nach Anspruch 3, bei dem die Spiegelsymmetrieebene senkrecht zur Abstandhalterebene und parallel zu einem Gittersteg (20) verläuft.

5. Brennelement nach Anspruch 2, 3 oder 4, bei dem die einander zugeordneten Teilgebiete (50a-d, 500,501-506a-d) aneinander grenzen.

6. Brennelement nach einem der vorhergehenden Ansprüche, bei dem die strömungsführenden Mittel (26, 44a, 44b) innerhalb eines Teilgebiets (50a-d, 500,501-506a-d) derart ausgelegt sind, dass die innerhalb dieses Teilgebiets (50a-d, 500,501-506a-d) erzeugten Querströmungen auf dieses lediglich ein Drehmoment ausüben.

## Claims

1. Fuel assembly for a pressurized water nuclear reactor, having a multiplicity of fuel rods (2) which are guided in a plurality of axially spaced spacers (4) composed of intersecting grid webs (20), which in each case form a grid with a multiplicity of grid cells (6) arranged in rows (10) and columns (8), with the grid webs (20) having flow-guiding means (26, 44a, 44b) which imprint on the cooling water flowing axially between the fuel rods (2) in each case in flow sub-channels (30) a cross-flow component which is oriented parallel to the spacer plane, **characterized in that** at least one spacer (4) is composed of a multiplicity of partial regions (50a-d, 500, 501-506a-d) which are each larger than a grid cell (6) and **in that** the flow-guiding means (26, 44a, 44b) are designed and distributed in the spacer (4) such that a cross-flow distribution is produced in the wake above each partial region (50a-d, 500, 501-506a-d) and causes an exchange of cooling water at least approximately exclusively between flow sub-channels (30) located inside the partial region (50a-d, 500).

2. Fuel assembly according to Claim 1, in which at least one disjoint partial region (50a-d, 500, 501-506a-d) is assigned at least to the plurality of partial regions (50a-d, 500, 501-506a-d) such that the forces and/or torques which result in each case on account of the cross-flow in the partial region (50a-d, 500, 501-506a-d) and in the disjoint partial region (50a-d, 500, 501-506a-d) assigned to it, or in the disjoint partial regions (50a-d, 500, 501-506a-d) assigned to it, cancel each other out at least approximately.

3. Fuel assembly according to Claim 2, in which the partial region (50a-d, 500, 501-506a-d) and at least one disjoint partial region (50a-d, 500, 501-506a-d) assigned to it are mirror-symmetrical to one another.

4. Fuel assembly according to Claim 3, in which the plane of mirror-symmetry extends at right angles to the spacer plane and parallel to a grid web (20).

5. Fuel assembly according to Claim 2, 3 or 4, in which the mutually assigned partial regions (50a-d, 500, 501-506a-d) adjoin one another.

6. Fuel assembly according to one of the preceding claims, in which the flow-guiding means (26, 44a, 44b) within a partial region (50a-d, 500, 501-506a-d) are designed such that the cross-flows produced inside said partial region (50a-d, 500, 501-506a-d) merely exert a torque on the latter.

## Revendications

1. Combustible pour réacteur à eau sous pression; avec une pluralité de crayons combustibles (2) qui sont dirigés dans une pluralité d'entretoises (4) éloignées axialement, qui sont constituées de lames de grille (20) qui se croisent qui forment chacune une grille avec une pluralité de cellules de grille (6) qui sont disposées en rangées (10) ou en colonnes (8), moyennant quoi les lames de grille (20) présentent des moyens dirigeant l'écoulement (26, 44a, 44b) qui marquent un composant d'écoulement transversal orienté parallèlement au niveau de l'entretoise à l'eau de refroidissement s'écoulant axialement entre les crayons combustibles (2) respectivement dans des canaux d'écoulement (30), **caractérisé en ce qu'**au moins une entretoise (4) est constituée d'une pluralité de zones partielles (50a-d, 500, 501-506a-d) qui sont chacune plus grosses qu'une cellule de grille (6) et que les moyens dirigeant l'écoulement (26, 44a, 44b) sont ainsi formés et répartis dans l'entretoise (4) de, manière qu'une répartition de l'écoulement transversal est produite en aval au-dessus de chaque zone partielle (50a-d, 500, 501-506a-d) qui produit un échange de l'eau de refroidissement au moins presque exclusivement entre les canaux d'écoulement (30) se trouvant à l'intérieur de la zone partielle (50a-d, 500).

2. Combustible selon la revendication 1, dans lequel au moins la pluralité de zones partielles (50a-d, 500, 501-506a-d) ont au moins une zone partielle (50a-d, 500, 501-506a-d) disjointe attribuée de telle sorte qu'en raison de l'écoulement transversal dans la zone partielle (50a-d, 500, 501-506a-d) et dans la zone partielle (50a-d, 500, 501-506a-d) disjointe qui lui est attribuée ou les zones partielles (50a-d, 500, 501-506a-d) disjointes qui lui sont attribuées, des forces et/ou des couples produits soient presque compensés les uns par les autres.

3. Combustible selon la revendication 2, dans lequel la zone partielle (50ad, 500, 501-506a-d) et au moins une zone partielle (50a-d, 500, 501-506a-d) disjointe qui lui est attribuée sont symétriques en miroir l'une à l'autre.

4. Combustible selon la revendication 3, dans lequel le plan symétrique en miroir est vertical au plan de l'entretoise et parallèle à une lame de grille (20).

5. Combustible selon la revendication 2, 3 ou 4, dans lequel les zones partielles (50a-d, 500, 501-506a-d) attribuées les unes aux autres sont adjacentes l'une à l'autre.

6. Combustible selon l'une dès revendications précédentes, dans lequel les moyens dirigeant l'écoulement (26, 44a, 44b) à l'intérieur d'une zone partielle (50a-d, 500, 501-506a-d) sont ainsi disposés que les courants transversaux produits à l'intérieur de cette zone partielle (50a-d, 500, 501-506a-d) exercent uniquement un couple sur celle-ci.
